# FASCICULE DE BREVET EUROPEEN

(11) **EP 0 511 889 B1**
(45) Date de publication et mention de la délivrance du brevet: **11.10.1995**
(21) Numéro de dépôt: 92401037.4
(22) Date de dépôt: 14.04.1992
(51) Int. Cl.: G02B 23/12, G02B 23/10, G02B 27/00, G02B 27/10, G02B 26/02

(54) **Mélangeur optique sans perturbations de chemins optiques, notamment pour visuel de casque**
Optisches Kombinationselement ohne Störung der optischen Wege, insbesondere für Helmanzeige
Optical combiner avoiding disturbance of optical paths, especially for helmet display

(30) Priorité: 19.04.1991 FR 9104859
(43) Date de publication de la demande: 04.11.1992
(73) Titulaire: SEXTANT AVIONIQUE, F-92360 Meudon-la-Forêt (FR)
(72) Inventeur: Cantaloube, Christian, F-92045 Paris la Défense (FR); Gerbe, Jean-Pierre, F-92045 Paris la Défense (FR)
(74) Mandataire: Chaverneff, Vladimir

(56) Documents cités:
- EP-A- 0 201 306
- EP-A- 0 206 324
- DE-A- 2 939 136
- FR-A- 2 665 267
- US-A- 3 389 950

## Description

La présente invention se rapporte à un mélangeur optique sans perturbations de chemins optiques, notamment pour visuel de casque.

Les visuels de casque sont généralement utilisés dans les avions d'armes ou les hélicoptères. Parmi les différents types de tels visuels, il existe des visuels équipés de deux sources d'images : un tube cathodique et un tube intensificateur de lumière (pour la vision nocturne). Le tube cathodique est utilisé de jour et de nuit pour présenter une image synthétique (informations de pilotage, de navigation et de tir). Le tube intensificateur d'images est utilisé seulement de nuit pour permettre une vision de paysage nocturne sans éclairage. Les images des deux sources sont présentées devant les yeux du pilote à l'aide d'un système à optique de collimation commune aux deux canaux, ce qui nécessite un mélangeur dans le trajet optique afin de pouvoir superposer les images de ces deux sources. Ce mélangeur est généralement un miroir semi-réfléchissant.

Pour fonctionner correctement, ce visuel doit satisfaire les contraintes suivantes en ce qui concerne les proportions de lumière réfléchie et transmise par le mélangeur. Le tube intensificateur de lumière fournit une luminance de quelques Cd/m². La luminance de l'image fournie par l'intensificateur de lumière et considérée au niveau des yeux du pilote doit aussi être de quelques Cd/m². Cette dernière luminance est directement liée au coefficient de réflexion du mélangeur, coefficient qui doit donc être maximal. Le tube cathodique peut fournir une luminance de plusieurs milliers de Cd/m². De nuit, l'image de ce tube cathodique doit avoir une luminance de quelques Cd/m². Le coefficient de transmission du mélangeur peut donc être très faible dans ce cas. Ainsi, de nuit, les caractéristiques typiques du mélangeur sont : réflexion : 90% (pour l'intensificateur de lumière) et transmission : 10% (pour le tube cathodique). De jour, l'image du tube cathodique doit avoir une luminance de 1000 à 2000 Cd/m² pour être visible sur un fond très lumineux. Par conséquent, le mélangeur défini pour la nuit ne convient plus de jour car il atténue trop fortement la lumière du tube cathodique.

Du fait que les bandes spectrales des images émises par les tubes cathodiques sont très proches de celles des images émises par les tubes intensificateurs de lumière, on ne peut avoir recours à des mélangeurs sélectifs classiques, qui ne sont pas suffisamment sélectifs.

Une solution serait d'enlever le mélangeur en utilisation diurne, puisqu'alors la voie intensificateur de lumière n'est pas utilisée de jour. Les mécanismes classiques de déplacement ont des encombrements et des poids non négligeables et incompatibles avec des visuels de casque. En outre, la suppression du mélangeur dans le trajet optique entraînerait une variation du chemin optique, ce qui changerait la position des images présentées à l'utilisateur et obligerait de procéder à un réglage de ce chemin optique ou entraînerait une dégradation de la qualité de l'image.

De plus, du fait que le mélangeur est en matériau présentant un indice de réfraction différent de 1, il a une influence optique indésirable : déplacement transversal de l'image, différence de mise au point, et d'autres aberrations optiques.

On pourrait envisager de remplacer le mélangeur par une pièce de verre (ou autre matériau optique) de mêmes dimensions, sans revêtement en utilisation diurne, afin de transmettre l'image du tube cathodique sans aucune atténuation, et sans apporter de défauts optiques, mais une telle solution serait, dans la plupart des cas, complexe et longue à mettre en oeuvre, et nécessiterait des mécanismes encombrants et peu faciles à commander.

L'invention a pour objet un mélangeur pour visuel de casque du type précité, mélangeur qui soit simple et peu onéreux à réaliser, peu encombrant, qui permette une superposition pratiquement parfaite des images des deux sources d'images en utilisation "nocturne", n'introduise pas d'aberrations ou perturbations optiques et n'apporte pratiquement pas d'atténuation en transmission en utilisation diurne.

Le mélangeur conforme à l'invention comporte un bloc optique rotatif à symétrie par rapport à un axe de révolution, pouvant tourner autour de cet axe de symétrie, ce bloc étant coupé selon un plan passant par ledit axe, l'une des faces des demi-blocs, déterminées par le plan de coupe du bloc, portant un revêtement semi-réfléchissant.

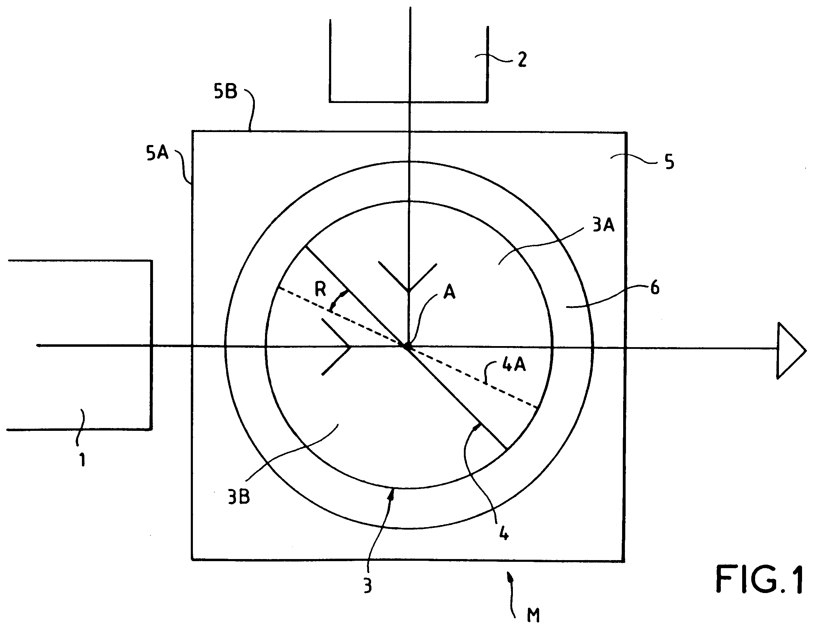

L'invention sera mieux comprise à la lecture de la description détaillée d'un mode de réalisation, pris à titre d'exemple non limitatif et illustré par le dessin annexé, dont la figure unique est une vue schématique de dessus d'un mélangeur conforme à l'invention.

Le mélangeur M transmet en permanence les images d'une source 1 (par exemple un tube cathodique). Ces images doivent être atténuées pour un premier état du mélangeur M, et non atténuées pour un second état du mélangeur.

D'autre part, le mélangeur M coopère avec une deuxième source d'images 2 (par exemple un intensificateur de lumière). De façon typique, les faisceaux des sources 1 et 2 sont perpendiculaires entre eux. Pour un premier état du mélangeur M, les images de la source 2 doivent être superposées à celles de la source 1 et ne doivent pratiquement pas être atténuées. Pour un second état du mélangeur 2, les images éventuellement produites par la source 2 ne doivent pas être superposées à celles de la source 1, ces dernières devant être transmises pratiquement sans atténuation.

Le mélangeur M comporte essentiellement un bloc optique 3 à symétrie de révolution autour d'un axe A. Le bloc 3 est en verre ou en autre matériau à propriétés voisines. L'axe A est disposé perpendiculaire au plan formé par les faisceaux issus des sources 1 et 2, et passe par le point de rencontre de ces deux faisceaux. Dans le mode de réalisation représenté, le bloc 3 est cylindrique, mais pourrait avoir une autre forme de révolution.

Le bloc 3 est en fait en deux parties 3A et 3B semi-cylindriques formées par exemple par sciage d'un cylindre selon un plan (dont la trace 4 est visible sur le dessin) passant par son axe de symétrie. La face plane de l'un des demi-blocs 3A ou 3B porte un revêtement semi-réfléchissant. Ce revêtement doit être fréquentiellement sélectif. Il est avantageusement dichroïque ou holographique. Après dépôt de ce revêtement , les deux demi-blocs 3A, 3B sont collés ensemble pour former le bloc 3. Un tel revêtement est angulairement sélectif, c'est-à-dire qu'il est réfléchissant pour une certaine incidence critique et ne l'est plus pour une incidence différente d'au moins 20° environ de l'incidence critique.

On a représenté sur le dessin, en trait plein, la trace 4 du plan du revêtement semi-réfléchissant lorsque le bloc 3 est dans la position pour laquelle il réfléchit le faisceau de la source 2 et transmet, avec atténuation de transmission (atténuation typique d'environ 10%), le faisceau de la source 1. On a représenté en trait interrompu la trace 4A du plan semi-réfléchissant lorsque le bloc 3 est dans la position pour laquelle ce revêtement ne réfléchit pratiquement pas le faisceau de la source 2 et transmet presque intégralement le faisceau de la source 1. L'angle R entre les traces 4 et 4A est typiquement compris entre 10 et 20°.

Du fait que le bloc 3 est une symétrie de révolution, l'angle d'incidence des faisceaux des sources 1 et 2 sur la face extérieure de ce bloc ne varie pas lors de la rotation du bloc. De plus, la rotation du bloc 3 autour de son axe de symétrie n'entraîne pas de modification des trajets de ces faisceaux, donc n'entraîne aucun déplacement de l'image en aval du mélangeur, ni aucune autre déformation de cette image.

De façon avantageuse, on peut enfermer le bloc 3 dans un bloc 5 dont la forme intérieure est complémentaire de celle du bloc 3. Ce bloc 5, fabriqué dans un matériau de même indice de réfraction que celui du bloc 3, présente des faces extérieures planes, parallèles deux à deux, et parallèles à l'axe A.

Les faces planes 5A, 5B du bloc 5 en vis-à-vis des sources 1 et 2 sont perpendiculaires aux faisceaux de ces sources. Ainsi, ce bloc 5 permet d'atténuer la puissance optique du bloc 3 et de rendre l'ensemble 3-5 équivalent à un bloc optique fixe à faces planes et parallèles. Bien entendu, le jeu entre les blocs 3 et 5 doit être minimal.

Selon une variante, permettant d'améliorer la neutralité optique du mélangeur de l'invention, on place dans le volume 6 compris entre les blocs 3 et 5 un fluide d'indice le plus proche de celui des blocs 3 et 5. Dans ce cas, le jeu entre les blocs 3 et 5 peut ne pas être minimal.

## Revendications

1. Mélangeur optique sans perturbations de chemins optiques, notamment pour visuel de casque, mélangeur coopérant avec deux sources d'images dont l'image de l'une (1) doit être transmise en permanence, atténuée ou non, et l'image de l'autre (2) transmise seulement pour un état du mélangeur et superposée, lorsqu'elle est transmise, à la première image, caractérisé par le fait qu'il comporte un bloc optique rotatif (3) à symétrie par rapport à un axe de révolution et pouvant tourner autour de cet axe, ce bloc étant coupé selon un plan (4) passant par ledit axe, l'une des faces des demi-blocs (3A, 3B), déterminés par le plan de coupe du bloc (3), portant un revêtement semi-réfléchissant.

2. Mélangeur selon la revendication 1, caractérisé par le fait que le bloc est de forme cylindrique.

3. Mélangeur selon l'une des revendications précédentes, caractérisé par le fait que le bloc (3) est enfermé dans un autre bloc (5) de forme complémentaire, cet autre bloc ayant des faces extérieures planes parallèles deux à deux et parallèles à l'axe de symétrie du premier bloc, ces faces planes étant respectivement perpendiculaires aux faisceaux issus des deux sources.

4. Mélangeur selon la revendication 3, caractérisé par le fait que le volume compris entre les deux blocs est rempli d'un fluide ayant un indice de réfraction voisin de celui des deux blocs.

## Patentansprüche

1. Optischer Mischer ohne Störungen von optischen Wegen, insbesondere für eine Helm-Anzeigevorrichtung, wobei der Mischer mit zwei Quellen von Bildern zusammenwirkt, von denen das Bild der einen Quelle (1) gedämpft oder nicht-gedämpft permanent übertragen werden muß und von denen das Bild der zweiten Quelle (2) nur für einen Zustand des Mischers übertragen und bei seiner Übertragung dem ersten Bild überlagert wird, dadurch gekennzeichnet, daß er einen drehbaren optischen Block (3) aufweist, der bezüglich einer Drehachse symmetrisch ist und um diese Achse gedreht werden kann, wobei dieser Block entlang einer durch diese Achse laufenden Ebene (4) geteilt ist, wobei eine der Seiten der durch die Teilungsebene des Blockes (3) bestimmten Halbblöcke (3A, 3B) eine halbreflektierende Beschichtung aufweist.

2. Mischer nach Anspruch 1, dadurch gekennzeichnet, daß der Block eine zylindrische Form aufweist.

3. Mischer nach einem der vorhergehenden Ansprüche, dadurch gekennzeichnet, daß der Block (3) in einem weiteren Block (5) mit komplementärer Form eingeschlossen ist, wobei dieser weitere Block paarweise parallele und zu der Symmetrieachse des ersten Blockes parallele, flache Außenflächen aufweist, wobei diese Flächen jeweils senkrecht zu den von den Quellen abgegebenen Bündeln sind.

4. Mischer nach Anspruch 3, dadurch gekennzeichnet, daß das zwischen den beiden Blöcken enthaltene Volumen mit einem Fluid gefüllt ist, dessen Brechungsindex demjenigen der beiden Blöcke benachbart ist.

## Claims

1. Optical mixer without disturbance of optical paths, notably for helmet visual display, the mixer cooperating with two image sources, the image of one (1) of which has to be transmitted continuously, attenuated or non-attenuated, and the image of the other (2) transmitted only for one state of the mixer, and superimposed, when it is transmitted, on the first image, characterized in that it includes a rotating optical block (3) with symmetry in relation to an axis of revolution and being capable of rotating about this axis, this block being sectioned along a plane (4) passing through said axis, one of the faces of the half-blocks (3A, 3B), which are determined by the sectioning plane of the block (3), bearing a semi-reflective coating.

2. Mixer according to Claim 1, characterized in that the block is of cylindrical shape.

3. Mixer according to one of the preceding claims, characterized in that the block (3) is enclosed in another block (5) of complementary shape, this other block having plane external faces that are parallel two by two and are parallel to the axis of symmetry of the first block, these plane faces being respectively perpendicular to the beams coming from the two sources.

4. Mixer according to Claim 3, characterized in that the volume lying between the two blocks is filled with a fluid having a refractive index close to that of the two blocks.
